# EUROPEAN PATENT SPECIFICATION

(11) **EP 3 643 669 B1**
(45) Date of publication and mention of the grant of the patent: **29.04.2026**
(21) Application number: 19204798.3
(22) Date of filing: 23.10.2019
(51) Int. Cl.: B66B 5/00

(54) **HEALTH MONITORING FOR ELEVATOR AND ESCALATOR SYSTEMS**
GESUNDHEITSÜBERWACHUNG FÜR AUFZUGS- UND ROLLTREPPENSYSTEME
SURVEILLANCE DE L'ÉTAT DE SANTÉ DE SYSTÈMES D'ASCENSEUR ET D'ESCALIER MÉCANIQUE

(30) Priority: 24.10.2018 US 201816169497
(43) Date of publication of application: 29.04.2020
(73) Proprietor: Otis Elevator Company, Farmington, Connecticut 06032 (US)
(72) Inventor: SCHMIDT, Walter Thomas, East Hartford, CT Connecticut 06108 (US); MANTESE, Joseph V., Ellington, CT Connecticut 06029 (US); CHEN, Yan, South Windsor, CT Connecticut 06074 (US); CHAUDHRY, Zaffir A., S. Glastonbury, CT Connecticut 06073 (US)
(74) Representative: Dehns

(56) References cited:
- EP-A1- 3 287 405
- WO-A1-2018/028989
- US-A1- 2003 217 894
- PANDUIT: "900 MHz Sensor: Vibration", 1 May 2017 (2017-05-01), XP055677919, Retrieved from the Internet <URL:https://www.panduit.com/content/dam/panduit/en/products/media/4/34/734/0734/101920734.pdf> [retrieved on 20200319]

## Description

### BACKGROUND

The subject matter disclosed herein generally relates to elevator systems and, more particularly, to a system for health monitoring for elevator and escalator systems.

In electrical-mechanical systems, downtime for maintenance and repair is a driver in total cost of ownership and also contributes to inconvenience to building tenants and customers. Prognostics and health monitoring (PHM) and condition based maintenance (CBM) have been tools utilized for reducing downtime in these complex electrical-mechanical systems. A typical health and usage monitoring system (HUMS) performs vibratory spectral analysis to diagnose impending component failures within an electrical-mechanical system. However, the implementation of a HUMS requires installation of vibratory sensors and associated wireless connectivity with direct power connections to allow for continuous monitoring. This installation with associated power supply can be costly within certain types of electrical-mechanical systems.

WO 2018/028989 A1 describes a method for determining a state of a system for transportation of passengers comprising: receiving condition data of the system, generated by a condition sensor adapted for sensing physical conditions of an equipment of the system; and receiving environmental data of the system, containing information on an influence of an environment of the system on the equipment and/or condition sensor. The condition data is weighted with the environmental data to determine a state of the equipment based on the weighted condition data.

EP 3 287 405 A1 describes a method for determining a malfunction of an elevator comprising: detecting a vibration signal within an elevator car; determining a vibration level from the signal; comparing the vibration level with a threshold value; and generating an alert when the vibration level exceeds the threshold value.

### BRIEF DESCRIPTION

According to a first aspect of the present invention, a system is provided for health monitoring of an electrical-mechanical system, in accordance with claim 1.

Further embodiments of the system may include that the controller is further configured to transmit the potential maintenance issues to a condition based maintenance system.

Further embodiments of the system may include that the power supply comprises a battery.

Further embodiments of the system may include that the controller is configured to store the sensor data in the memory.

Further embodiments of the system may include that determining the potential maintenance issues associated with the electrical-mechanical system comprises comparing the sensor data with historical sensor data associated with the moving element to identify a pattern indicative of the potential maintenance issue.

Further embodiments of the system may include that the one or more sensors are configured to collect sensor data responsive to detection of a temperature in the electrical-mechanical system above a threshold temperature.

Further embodiments of the system may include that the one or more sensors are configured to collect sensor data responsive to a signal received from the controller.

Further embodiments of the system may include that the threshold temperature is determined based on historical sensor data associated with the electrical-mechanical system.

According to a second aspect of the present invention, a method is provided for health monitoring of an electrical-mechanical system, in accordance with claim 8.

Further embodiments of the method may include transmitting the potential maintenance issues to a condition based maintenance system.

Further embodiments of the method may include that the one or more sensors include a power supply and the power supply includes a battery.

Further embodiments of the method may include that the element of the electrical-mechanical system comprises at least one bearing.

Further embodiments of the method may include determining the potential maintenance issues associated with the electrical-mechanical system comprises comparing the sensor data with historical sensor data associated with the element to identify a pattern indicative of the potential maintenance issue.

Further embodiments of the method may include that the one or more sensors collect the sensor data responsive to detection of a temperature in the electrical-mechanical system above a threshold temperature.

### BRIEF DESCRIPTION OF THE DRAWINGS

The present invention is illustrated by way of example and not limited in the accompanying figures in which like reference numerals indicate similar elements.
FIG. 1 is a schematic illustration of an elevator system that may employ various embodiments of the disclosure;
FIG. 2 depicts a block diagram of a computer system for use in implementing one or more embodiments of the disclosure;
FIG. 3 depicts a block diagram of an elevator system with health monitoring according to one or more embodiments of the disclosure;
FIG. 4 depicts a flow diagram of a method for health monitoring in electrical-mechanical systems according to one or more embodiments of the disclosure; and
FIG. 5 depicts a block diagram of an escalator system that may employ various embodiments of the disclosure.

### DETAILED DESCRIPTION

As shown and described herein, various features of the disclosure will be presented. Various embodiments may have the same or similar features and thus the same or similar features may be labeled with the same reference numeral, but preceded by a different first number indicating the figure to which the feature is shown. Thus, for example, element "a" that is shown in FIG. X may be labeled "Xa" and a similar feature in FIG. Z may be labeled "Za." Although similar reference numbers may be used in a generic sense, various embodiments will be described and various features may include, within the scope of the appended claims, changes, alterations, modifications, etc. as will be appreciated by those of skill in the art, whether explicitly described or otherwise would be appreciated by those of skill in the art.

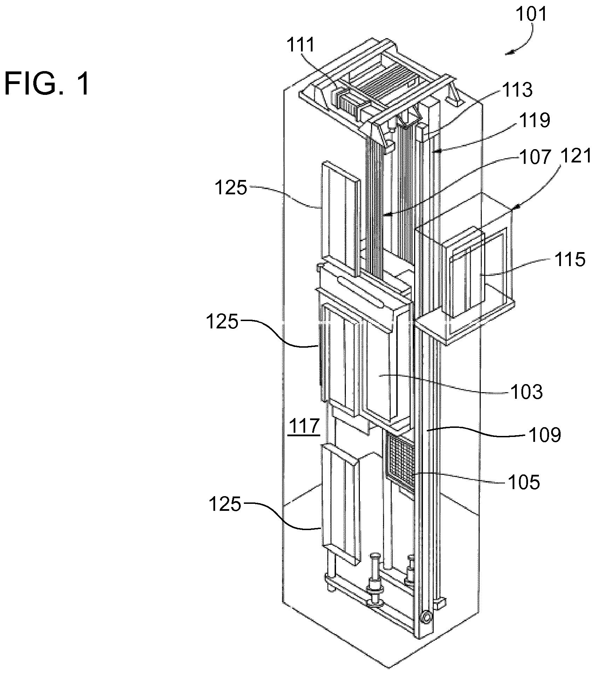

FIG. 1 is a perspective view of an elevator system 101 including an elevator car 103, a counterweight 105, a roping 107, a guide rail 109, a machine 111, a position encoder 113, and a controller 115. The elevator car 103 and counterweight 105 are connected to each other by the roping 107. The roping 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The roping 107 engages the machine 111, which is part of an overhead structure of the elevator system 101. The machine 111 is configured to control movement between the elevator car 103 and the counterweight 105. The position encoder 113 may be mounted on an upper sheave of a speed-governor system 119 and may be configured to provide position signals related to a position of the elevator car 103 within the elevator shaft 117. In other embodiments, the position encoder 113 may be directly mounted to a moving component of the machine 111, or may be located in other positions and/or configurations as known in the art.

The controller 115 is located, as shown, in a controller room 121 of the elevator shaft 117 and is configured to control the operation of the elevator system 101, and particularly the elevator car 103. For example, the controller 115 may provide drive signals to the machine 111 to control the acceleration, deceleration, leveling, stopping, etc. of the elevator car 103. The controller 115 may also be configured to receive position signals from the position encoder 113. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor.

Although shown and described with a roping system, elevator systems that employ other methods and mechanisms of moving an elevator car within an elevator shaft, such as hydraulic and/or ropeless elevators, may employ embodiments of the present disclosure. FIG. 1 is merely a non-limiting example presented for illustrative and explanatory purposes.

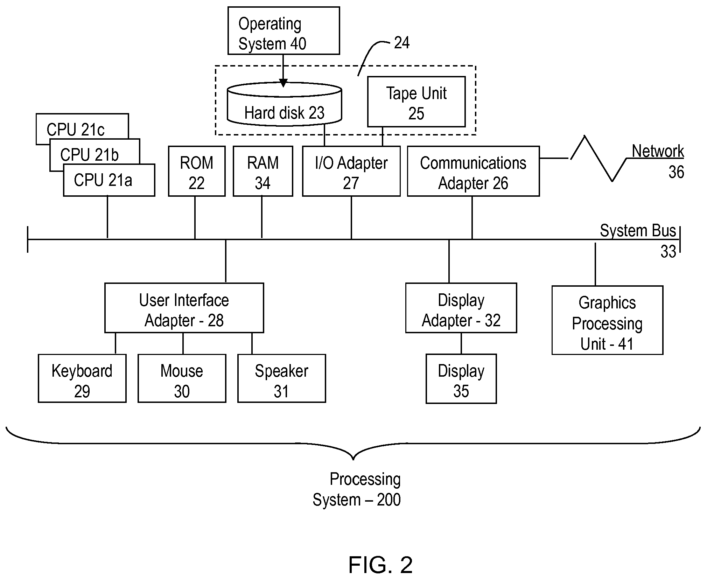

Referring to FIG. 2, there is shown an embodiment of a processing system 200 for implementing the teachings herein. In this embodiment, the system 200 has one or more central processing units (processors) 21a, 21b, 21c, etc. (collectively or generically referred to as processor(s) 21). In one or more embodiments, each processor 21 may include a reduced instruction set computer (RISC) microprocessor. Processors 21 are coupled to system memory 34 (RAM) and various other components via a system bus 33. Read only memory (ROM) 22 is coupled to the system bus 33 and may include a basic input/output system (BIOS), which controls certain basic functions of system 200.

FIG. 2 further depicts an input/output (I/O) adapter 27 and a network adapter 26 coupled to the system bus 33. I/O adapter 27 may be a small computer system interface (SCSI) adapter that communicates with a hard disk 23 and/or tape storage drive 25 or any other similar component. I/O adapter 27, hard disk 23, and tape storage device 25 are collectively referred to herein as mass storage 24. Operating system 40 for execution on the processing system 200 may be stored in mass storage 24. A network communications adapter 26 interconnects bus 33 with an outside network 36 enabling data processing system 200 to communicate with other such systems. A screen (e.g., a display monitor) 35 is connected to system bus 33 by display adaptor 32, which may include a graphics adapter to improve the performance of graphics intensive applications and a video controller. In one embodiment, adapters 27, 26, and 32 may be connected to one or more I/O busses that are connected to system bus 33 via an intermediate bus bridge (not shown). Suitable I/O buses for connecting peripheral devices such as hard disk controllers, network adapters, and graphics adapters typically include common protocols, such as the Peripheral Component Interconnect (PCI). Additional input/output devices are shown as connected to system bus 33 via user interface adapter 28 and display adapter 32. A keyboard 29, mouse 30, and speaker 31 all interconnected to bus 33 via user interface adapter 28, which may include, for example, a Super I/O chip integrating multiple device adapters into a single integrated circuit.

In exemplary embodiments, the processing system 200 includes a graphics processing unit 41. Graphics processing unit 41 is a specialized electronic circuit designed to manipulate and alter memory to accelerate the creation of images in a frame buffer intended for output to a display. In general, graphics processing unit 41 is very efficient at manipulating computer graphics and image processing and has a highly parallel structure that makes it more effective than general-purpose CPUs for algorithms where processing of large blocks of data is done in parallel. The processing system 200 described herein is merely exemplary and not intended to limit the application, uses, and/or technical scope of the present disclosure, which can be embodied in various forms known in the art.

Thus, as configured in FIG. 2, the system 200 includes processing capability in the form of processors 21, storage capability including system memory 34 and mass storage 24, input means such as keyboard 29 and mouse 30, and output capability including speaker 31 and display 35. In one embodiment, a portion of system memory 34 and mass storage 24 collectively store an operating system coordinate the functions of the various components shown in FIG. 2. FIG. 2 is merely a non-limiting example presented for illustrative and explanatory purposes.

Turning now to an overview of technologies that are more specifically relevant to aspects of the disclosure, collection of electrical-mechanical system performance data can be useful for predicting maintenance needs for these types of systems. Electrical-mechanical systems include elevator systems, escalator systems, moving walkways, and the like. To collect performance data associated with these systems, sensors need to be installed at various locations around electrical and mechanical components. In many instances, a reliable power source is not available to power sensors in areas of interest in these systems. For example, in an elevator system hoistway, it can be beneficial to collect vibration data on bearings at or near a sheave and counterweight. These areas of interest are difficult to access and also do not include wiring sufficient to supply power to sensors. There exists a need for an easy to install, low cost, and low power sensor system that can collect performance data within an electrical-mechanical system.

Turning now to an overview of the aspects of the disclosure, one or more embodiments address the above-described shortcomings of the prior art by providing a health monitoring system that employs low power, battery sensors and utilizes processes for reducing power consumption for these sensor. In one or more embodiments, the sensors can be near zero power resonant frequency accelerometers and wireless wake-up for health monitoring and communication. The characteristics of these sensors (e.g., size, battery powered, etc.) allow for installation in hard to reach areas and areas without access to power. The sensors deployed in the health monitoring system can be used to couple to unique frequencies characteristics of failure modes. Sensor data related to areas of interest in the electrical-mechanical systems can be communicated back to the health monitoring system for processing to determine system health and identify/predict potential maintenance issues. To conserve power for these sensors can utilize radio frequency (RF) wake-up technology or any other type of wake-up technology to respond to system level queries and triggers for collection of sensor data. That is to say, the sensors can remain off or in a low power state and then "wake-up" responsive to a triggering event such as a system query or the detection of a vibration, temperature, or other condition within the electrical-mechanical system.

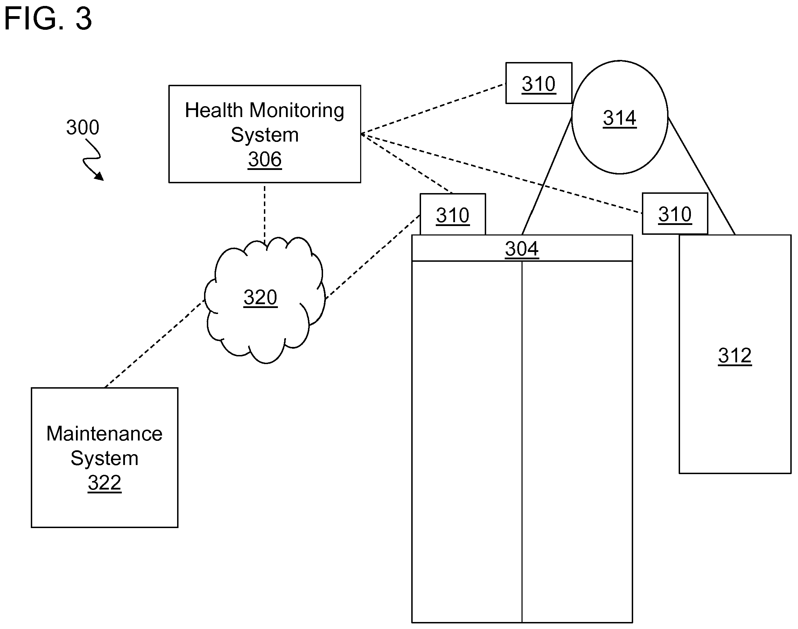

Turning now to a more detailed description of aspects of the present disclosure, FIG. 3 depicts a system 300 for health monitoring in an electrical-mechanical system. In one or more embodiments, the system 300 can be utilized in an elevator system that includes a hoistway and an elevator car 304. The elevator system can include additional components such as a sheave 314 and a counterweight 312. These two components are for exemplary and illustrative purposes and are not intended to limit the application, uses, and/or technical scope of the present disclosure. The system 300 also includes sensors 310 installed at various locations in the elevator system. The sensors 310 can be in electronic communication with a health monitoring system 306 that can receive collected sensor data from the sensors 310. In one or more embodiments, the sensors 310 can communicate with the health monitoring system 306 through a network 320 or can communicate directly to the health monitoring system 306. The health monitoring system 306 can communicate with a maintenance system 322, such as a condition based maintenance system. The maintenance system 322 can be local or remote to the elevator installation and communication between the maintenance system 322 and the health monitoring system 306 can be through any known wired or wireless communications means and/or protocols. The counterweight 312 and sheave 314 are exemplary in that they typically are mechanical in nature and do not, typically, have electrical wiring for power at or near the bearings or other areas of interests on these components.

In one or more embodiments, the sensors 310 can be a vibratory and tuned resonant modes for power reduction. In one embodiment, the vibratory spectral response can be selected on fabrication with quiescent power draws of between about 10 - 100 nW. In one or more embodiments, the sensors 310 include a battery power source. The battery can be a coin-cell battery to supply power to the sensors 310. In one or more embodiments, the sensors 310 can be coupled to the unique frequencies characteristics of failure modes in elevator systems, escalator systems, and other electrical mechanical systems. That is to say, the sensor can be activated at a vibration frequency that is known to indicate a problem or impending problem. The sensors 310 can be installed on areas of interest including, but not limited to, tension member sheave roller bearings, door roller bearings, escalator rollers/bearings, and the like. In one or more embodiments, the sensors 310 can be self-contained and not require any wiring for power or communication with the health monitoring system 306. The sensors 310 draw minimal quiescent power when not sensing vibratory signals above a certain threshold vibration. For example, during normal operations of the elevator system, vibrations will be below a threshold vibration level and the sensors 310 can operate drawing quiescent power. However, when a vibration is detected by the sensors 310 above a threshold vibration level, the sensors 310 can collect and transmit the sensor vibration data to the health monitoring system 306 for processing. The health monitoring system 306 can analyze the sensor vibration data to determine potential maintenance needs for the elevator system. The threshold vibration level can be set in advance by a technician or can be determined based on sensor data collected from the elevator system. The threshold vibration level may depend on the type of sensor utilized. Also, the threshold vibration level can be adjusted based on historical vibration levels within an elevator system. For example, if over time, a vibration range is detected by the sensors 310 and the range is found to be suitable for operation of the elevator system, the threshold vibration can be adjusted to further save power for the sensors 310 installed in the elevator system. The power savings for the sensors 310 relate to the lifetime of the sensors which reduces installation costs. By utilizing sensors 310 with battery power supplies, the sensors 310 can be installed in hard to reach locations without the need for access to wired power. By reducing the power consumption of the sensors 310, the system 300 can reduce maintenance costs related to installation of the sensors 310 when the battery runs out.

In one or more embodiments, the sensors 310 can achieve low power operation by tuning the sensors' 310 resonant frequency with the dominant frequencies of the elevator or machine bearings. In embodiments, the sensors 310 can be is a MEMS sensor and can include a low power ASIC (Application-Specific Integrated Circuit) which performs the comparison of the sensor vibratory output to a pre-set threshold. Further, the sensor uses piezoelectric materials which produce electrical output (voltage) proportional to acceleration. The piezoelectric element within the sensor is designed so that its resonant frequency is matched with the dominant frequencies of the mechanical system being monitored.

In one or more embodiments, the health monitoring system 306 can comparing the sensor data with historical sensor data associated with the moving elements of the elevator system to identify a pattern indicative of a potential maintenance issue.

In one or more embodiments, the health monitoring system 306 and sensors 310 can be implemented on the processing system 200 found in FIG. 2. Additionally, a cloud computing system can be in wired or wireless electronic communication with one or all of the elements of the system 300. Cloud computing can supplement, support or replace some or all of the functionality of the elements of the system 300. Additionally, some or all of the functionality of the elements of system 300 can be implemented as a node of a cloud computing system. A cloud computing node is only one example of a suitable cloud computing node and is not intended to suggest any limitation as to the scope of use or functionality of embodiments described herein.

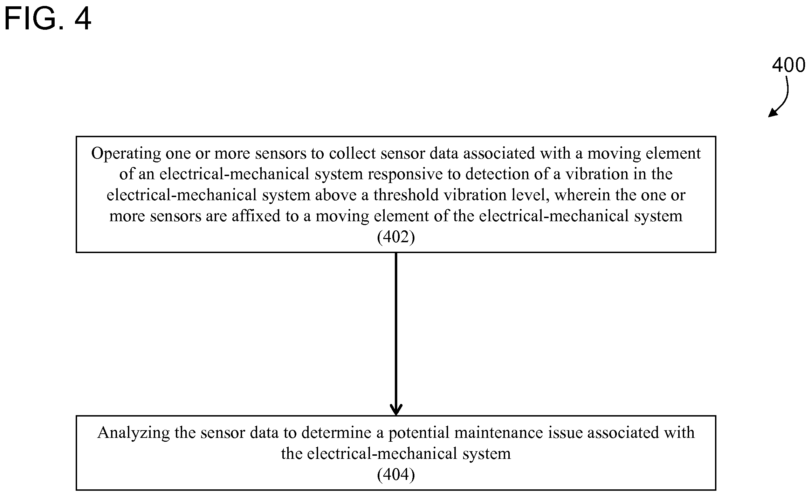

FIG. 4 depicts a flow diagram of a method for health monitoring of an electrical-mechanical system according to one or more embodiments. The method 400 includes operating one or more sensors to collect sensor data associated with a moving element of an electrical-mechanical system responsive to detection of a vibration in the electrical-mechanical system above a threshold vibration level, wherein the one or more sensors are affixed to a moving element of the electrical-mechanical system, as shown in block 402. And at block 404, the method 400 includes analyzing the sensor data to determine a potential maintenance issue associated with the electrical-mechanical system.

Additional processes may also be included. It should be understood that the processes depicted in FIG. 4 represent illustrations and that other processes may be added or existing processes may be removed, modified, or rearranged without departing from the scope and spirit of the present disclosure.

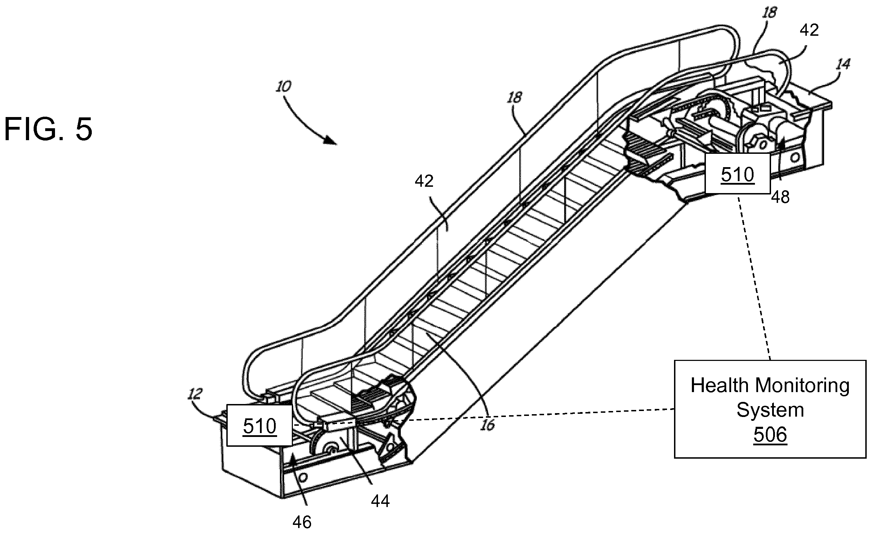

FIG. 5 depicts an escalator control system according to one or more embodiments. The escalator control system includes a passenger detection system 506 and a plurality of sensors 510. The escalator control system 500 also includes an escalator 10, which includes first landing 12, second landing 14, a continuous loop of steps 16, handrails 18, balustrades 42 defining a passenger riding area therebetween, drive system 44, and machine rooms 46, 48. Steps 16 extend from first landing 12 to second landing 14. Balustrades 22 extend along the side of steps 16 from first landing 12 to second landing 14, and handrails 18 are slidingly engaged with each balustrade 22. Drive system 44 is configured to drive steps 16 and handrails 18 at a constant speed and in synchrony with one another. A first portion of drive system 24 is located in machine room 46 and a second portion of drive system 44 is located in machine room 48. The escalator 10 is merely a non-limiting example presented for illustrative and explanatory purposes.

In one or more embodiments, the health monitoring system 506 can be utilized along with sensors 510 for the escalator system 10. As described above, the health monitoring system 506 can utilize sensor data collected from various sensors 510 installed in areas of interest around the escalator 10. These areas of interest can be difficult to access and may not have access to wired power supplies for the sensors 510. The health monitoring system 506 can utilized the sensors 310 described in FIG. 3 which utilize battery power supplies and operate in a low power mode drawing quiescent power until a condition is met. In one or more embodiments, the condition can include the exceeding of a threshold vibration or temperature that "wakes-up" the sensors 510 to collect and transmit sensor data to the health monitoring system 506 for processing to determine a potential maintenance issue or need in the system 10.

A detailed description of one or more embodiments of the disclosed apparatus and method are presented herein by way of exemplification and not limitation with reference to the Figures.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that various changes may be made without departing from the scope of the appended claims. In addition, many modifications may be made to adapt a particular situation or material to the teachings of the present disclosure without departing from the scope of the claims. Therefore, it is intended that the present invention not be limited to the particular embodiment disclosed as the best mode contemplated for carrying out this present invention, but that the present disclosure will include all embodiments falling within the scope of the claims.

## Claims

1. A system (300) for health monitoring of an electrical-mechanical system, wherein the electrical-mechanical system is an elevator system (101, 304), an escalator system (10) or a moving walkway, the system (300) comprising:
a controller coupled to a memory; and
one or more sensors (310; 510) configured to be affixed to an element of the electrical-mechanical system;
wherein the one or more sensors (310; 510) comprise a power supply; and
wherein the one or more sensors (310; 510) are configured to:
collect sensor data responsive to detection of a vibration in the electrical-mechanical system above a threshold vibration, wherein the sensor data is associated with the element; and
transmit the sensor data to the controller, wherein the controller is configured to analyze the sensor data to determine a potential maintenance issue associated with the electrical-mechanical system;
**characterized in that** the threshold vibration is determined based on historical sensor data associated with the electrical-mechanical system; and
**in that** the one or more sensors (310; 510) operate in a low power state until the detection of the vibration in the electrical-mechanical system above the threshold vibration.

2. The system of Claim 1, wherein the controller is further configured to transmit the potential maintenance issue to a condition based maintenance system (322).

3. The system of Claim 1 or 2, wherein the power supply comprises a battery.

4. The system of any preceding claim, wherein the controller is configured to store the sensor data in the memory.

5. The system of any preceding claim, wherein determining the potential maintenance issues associated with the electrical-mechanical system comprises comparing the sensor data with historical sensor data associated with the moving element to identify a pattern indicative of the potential maintenance issue.

6. The system of any preceding claim, wherein the one or more sensors (310; 510) are configured to collect sensor data responsive to detection of a temperature in the electrical-mechanical system above a threshold temperature,
wherein the threshold temperature is preferably determined based on historical sensor data associated with the electrical-mechanical system.

7. The system of any preceding claim, wherein the one or more sensors (310; 510) are configured to collect sensor data responsive to a signal received from the controller.

8. A method for health monitoring of an electrical-mechanical system, wherein the electrical-mechanical system is an elevator system (101, 304), an escalator system (10) or a moving walkway, the method comprising
collecting, by one or more sensors (310; 510), sensor data associated with an element of the electrical-mechanical system responsive to detection of a vibration in the electrical-mechanical system above a threshold vibration, wherein the one or more sensors (310; 510) are affixed to the element of the electrical-mechanical system;
analyzing the sensor data to determine a potential maintenance issue associated with the electrical-mechanical system;
**characterized in that** the threshold vibration is determined based on historical sensor data associated with the electrical-mechanical system; and
and **in that** the one or more sensors (310; 510) operate in a low power state until the detection of the vibration in the electrical-mechanical system above the threshold vibration.

9. The method of Claim 8, further comprising transmitting the potential maintenance issues to a condition based maintenance system (322).

10. The method of claim 8 or 9, wherein the one or more sensors (310; 510) comprise a power supply, wherein the power supply preferably comprises a battery.

11. The method of any of claims 8 to 10, wherein the element of the electrical-mechanical system comprises at least one bearing.

12. The method of any of claims 8 to 11, wherein determining the potential maintenance issues associated with the electrical-mechanical system comprises comparing the sensor data with historical sensor data associated with the element to identify a pattern indicative of the potential maintenance issue.

13. The method of any of claims 8 to 12, wherein the one or more sensors collect the sensor data responsive to detection of a temperature in the electrical-mechanical system above a threshold temperature.

## Patentansprüche

1. System (300) zur Zustandsüberwachung eines elektromechanischen Systems, wobei es sich bei dem elektromechanischen System um ein Aufzugssystem (101, 304), ein Rolltreppensystem (10) oder einen Fahrsteig handelt, wobei das System (300) Folgendes umfasst:
eine Steuerung, die mit einem Speicher gekoppelt ist; und
einen oder mehrere Sensoren (310; 510), die konfiguriert sind, um an einem Element des elektromechanischen Systems befestigt zu werden;
wobei der eine oder die mehreren Sensoren (310; 510) eine Stromversorgung umfassen; und
wobei der eine oder die mehreren Sensoren (310; 510) konfiguriert sind zum:
Erfassen von Sensordaten ansprechend auf das Erkennen einer Schwingung im elektromechanischen System oberhalb einer Schwellenwertschwingung, wobei die Sensordaten mit dem jeweiligen Element verbunden sind; und
Übertragen der Sensordaten an die Steuerung, wobei die Steuerung konfiguriert ist, um die Sensordaten zu analysieren, um ein potenzielles Wartungsproblem in Verbindung mit dem elektromechanischen System zu bestimmen;
**dadurch gekennzeichnet, dass**
die Schwellenwertschwingung basierend auf historischen Sensordaten in Verbindung mit dem elektromechanischen System bestimmt wird; und
dadurch, dass der eine oder die mehreren Sensoren (310; 510) in einem Stromsparmodus arbeiten, bis die Schwingung im elektromechanischen System oberhalb der Schwellenwertschwingung erkannt wird.

2. System nach Anspruch 1, wobei die Steuerung ferner konfiguriert ist, um das potenzielle Wartungsproblem an ein zustandsbasiertes Wartungssystem (322) zu übertragen.

3. System nach Anspruch 1 oder 2, wobei die Stromversorgung eine Batterie umfasst.

4. System nach einem der vorhergehenden Ansprüche, wobei die Steuerung ferner konfiguriert ist, um die Sensordaten in dem Speicher zu speichern.

5. System nach einem der vorhergehenden Ansprüche, wobei das Bestimmen der potenziellen Wartungsprobleme in Verbindung mit dem elektromechanischen System das Vergleichen der Sensordaten mit historischen Sensordaten in Verbindung mit dem beweglichen Element umfasst, um ein Muster zu identifizieren, das auf das potenzielle Wartungsproblem hinweist.

6. System nach einem der vorhergehenden Ansprüche, wobei der eine oder die mehreren Sensoren (310; 510) konfiguriert sind, um Sensordaten, ansprechend auf das Erkennen einer Temperatur im elektromechanischen System oberhalb einer Schwellenwerttemperatur, zu erfassen,
wobei die Schwellenwerttemperatur vorzugsweise basierend auf historischen Sensordaten in Verbindung mit dem elektromechanischen System bestimmt wird.

7. System nach einem der vorhergehenden Ansprüche, wobei der eine oder die mehreren Sensoren (310; 510) konfiguriert sind, um Sensordaten, ansprechend auf ein von der Steuerung empfangenes Signal, zu erfassen.

8. Verfahren zur Zustandsüberwachung eines elektromechanischen Systems, wobei es sich bei dem elektromechanischen System um ein Aufzugssystem (101, 304), ein Rolltreppensystem (10) oder einen Fahrsteig handelt, wobei das Verfahren Folgendes umfasst
Erfassen, durch einen oder mehrere Sensoren (310; 510), von Sensordaten in Verbindung mit einem Element des elektromechanischen Systems, ansprechend auf das Erkennen einer Schwingung im elektromechanischen System oberhalb einer Schwellenwertschwingung,
wobei der eine oder die mehreren Sensoren (310; 510) an dem Element des elektromechanischen Systems befestigt sind;
Analysieren der Sensordaten zum Bestimmen eines potenziellen Wartungsproblems in Verbindung mit dem elektromechanischen System;
**dadurch gekennzeichnet, dass**
die Schwellenwertschwingung basierend auf historischen Sensordaten in Verbindung mit dem elektromechanischen System bestimmt wird; und
dadurch, dass der eine oder die mehreren Sensoren (310; 510) in einem Stromsparmodus arbeiten, bis die Schwingung im elektromechanischen System oberhalb der Schwellenwertschwingung erkannt wird.

9. Verfahren nach Anspruch 8, ferner umfassend das Übertragen der potenziellen Wartungsprobleme an ein zustandsbasiertes Wartungssystem (322).

10. Verfahren nach Anspruch 8 oder 9, wobei der eine oder die mehreren Sensoren (310; 510) eine Stromversorgung umfassen, wobei die Stromversorgung vorzugsweise eine Batterie umfasst.

11. Verfahren nach einem der Ansprüche 8 bis 10, wobei das Element des elektromechanischen Systems mindestens ein Lager umfasst.

12. Verfahren nach einem der Ansprüche 8 bis 11, wobei das Bestimmen der potenziellen Wartungsprobleme in Verbindung mit dem elektromechanischen System das Vergleichen der Sensordaten mit historischen Sensordaten in Verbindung mit dem beweglichen Element umfasst, um ein Muster zu identifizieren, das auf das potenzielle Wartungsproblem hinweist.

13. Verfahren nach einem der Ansprüche 8 bis 12, wobei der eine oder die mehreren Sensoren die Sensordaten, ansprechend auf das Erkennen einer Temperatur im elektromechanischen System oberhalb einer Schwellenwerttemperatur, erfassen.

## Revendications

1. Système (300) de surveillance de l'état de santé d'un système électromécanique, dans lequel le système électromécanique est un système d'ascenseur (101, 304), un système d'escalier (10) ou un trottoir roulant, le système (300) comprenant :
un contrôleur couplé à une mémoire ; et
un ou plusieurs capteurs (310 ; 510) configurés pour être attachés à un élément du système électromécanique ;
dans lequel l'un ou plusieurs capteurs (310 ; 510) comprennent une source d'alimentation ; et
dans lequel l'un ou plusieurs capteurs (310 ; 510) sont configurés pour :
collecter des données des capteurs en réponse à une détection d'une vibration dans le système électromécanique dépassant un seuil de vibration, les données des capteurs étant associées à l'élément ; et
transmettre les données des capteurs au contrôleur, le contrôleur étant configuré pour analyser les données des capteurs afin de déterminer un problème de maintenance potentiel associé au système électromécanique ;
**caractérisé en ce que**
le seuil de vibration est déterminé à partir des données historiques des capteurs associées au système électromécanique ; et
**en ce que** l'un ou plusieurs capteurs (310 ; 510) fonctionnent dans un état de faible puissance jusqu'à la détection de la vibration dans le système électromécanique dépassant le seuil de vibration.

2. Système selon la revendication 1, dans lequel le contrôleur est configuré en outre pour transmettre le problème de maintenance potentiel à un système de maintenance basé sur une condition (322).

3. Système selon la revendication 1 ou 2, dans lequel la source d'alimentation comprend une batterie.

4. Système selon une quelconque revendication précédente, dans lequel le contrôleur est configuré pour stocker les données des capteurs dans la mémoire.

5. Système selon une quelconque revendication précédente, dans lequel la détermination du problème de maintenance potentiel associé au système électromécanique comprend une comparaison des données des capteurs avec des données historiques des capteurs associées à un élément mobile afin d'identifier un motif indicatif du problème de maintenance potentiel.

6. Système selon une quelconque revendication précédente, dans lequel l'un ou plusieurs capteurs (310 ; 510) sont configurés pour collecter des données des capteurs en réponse à une détection d'une température dans le système électromécanique dépassant un seuil de température,
dans lequel le seuil de température est déterminé de préférence à partir des données historiques des capteurs associées au système électromécanique.

7. Système selon une quelconque revendication précédente, dans lequel l'un ou plusieurs capteurs (310 ; 510) sont configurés pour collecter des données des capteurs en réponse à un signal reçu à partir du contrôleur.

8. Procédé de surveillance de l'état de santé d'un système électromécanique, dans lequel le système électromécanique est un système d'ascenseur (101, 304), un système d'escalier (10) ou un trottoir roulant, le procédé comprenant
collecter, par l'un ou plusieurs capteurs (310 ; 510), des données des capteurs associées à un élément du système électromécanique en réponse à une détection d'une vibration dans le système électromécanique dépassant un seuil de vibration,
dans lequel l'un ou plusieurs capteurs (310 ; 510) sont configurés pour être attachés à l'élément du système électromécanique ;
analyser les données des capteurs afin de déterminer un problème de maintenance potentiel associé au système électromécanique ; **caractérisé en ce que**
le seuil de vibration est déterminé à partir des données historiques des capteurs associées au système électromécanique ; et
**en ce que** l'un ou plusieurs capteurs (310 ; 510) fonctionnent dans un état de faible puissance jusqu'à la détection de la vibration dans le système électromécanique dépassant le seuil de vibration.

9. Procédé selon la revendication 8, comprenant en outre transmettre le problème de maintenance potentiel à un système de maintenance basé sur une condition (322).

10. Procédé selon la revendication 8 ou 9, dans lequel l'un ou plusieurs capteurs (310 ; 510) comprennent une source d'alimentation, la source d'alimentation comprenant de préférence une batterie.

11. Procédé selon une quelconque des revendications 8 à 10, dans lequel l'élément du système électromécanique comprend au moins un roulement.

12. Procédé selon une quelconque des revendications 8 à 11, dans lequel la détermination du problème de maintenance potentiel associé au système électromécanique comprend une comparaison des données des capteurs avec des données historiques des capteurs associées à l'élément afin d'identifier un motif indicatif du problème de maintenance potentiel.

13. Procédé selon une quelconque des revendications 8 à 12, dans lequel l'un ou plusieurs capteurs collectent les données des capteurs en réponse à une détection d'une température dans le système électromécanique dépassant un seuil de température.
